# EUROPÄISCHE PATENTSCHRIFT

(11) **EP 1 246 868 B1**
(45) Veröffentlichungstag und Bekanntmachung des Hinweises auf die Patenterteilung: **16.02.2005**
(21) Anmeldenummer: 00993722.8
(22) Anmeldetag: 21.12.2000
(51) Int. Cl.: C08L 31/04, C09J 131/04, C09D 131/04

(54) **POLYMERDISPERSION MIT VERNETZERHARZ, DEREN HERSTELLUNG UND VERWENDUNG**
POLYMER DISPERSION WITH A CROSS-LINKING RESIN, A METHOD FOR PRODUCING THE SAME AND THE USE THEREOF
DISPERSION DE POLYMERE COMPRENANT UNE RESINE RETICULANTE, SON PROCEDE DE PRODUCTION ET SON UTILISATION

(30) Priorität: 30.12.1999 CL 319699; 18.03.2000 DE 10013598; 02.10.2000 DE 10048867
(43) Veröffentlichungstag der Anmeldung: 09.10.2002
(73) Patentinhaber: Henkel Kommanditgesellschaft auf Aktien, 40589 Düsseldorf (DE); Henkel Chile S.A., Santiago de Chile (CL)
(72) Erfinder: PAVEZ ARANGUIZ, Roberto, VI Region (CL); LOHR, Christoph, 42117 Wuppertal (DE); GARCIA ARCOS, Hugo, Armando, Santiago (CL); JAKUBOWSKI, Gerard, 32457 Porta Westfalica (DE); FRIEDRICH, Klaus, 32549 Bad Oeynhausen (DE)
(74) Vertreter: Mathes, Nikolaus, Dr.
(86) Internationale Anmeldenummer: PCT/EP2000/013089
(87) Internationale Veröffentlichungsnummer: WO 2001/049788

(56) Entgegenhaltungen:
- EP-A- 0 191 460
- EP-A- 0 394 774
- EP-A- 0 623 661
- EP-A- 0 933 412
- US-A- 5 545 684
- US-A- 5 932 647

## Beschreibung

Die vorliegende Erfindung betrifft eine Polymerdispersion, enthaltend Wasser, mindestens ein durch Emulsionspolymerisation hergestelltes Polymeres, mindestens ein Schutzkolloid, mindestens ein wasserlösliches saures Metallsalz und mindestens ein Vemetzerharz auf Basis von Hydroxymethyl-substituierten Imidazolidinonen wie das 1,3-Dimethylol-4,5-dihydroxyimidazolidinon (4,5-Dihydroxy-N,N'-dimethylolethylenharnstoff). Hydroxymethyl-substituierten Pyrimidinonen oder Hydroxymethyl-substituierten Triazinonen oder deren Selbstkondensationsprodukte, oder gemischte Kondensate aus zwei oder mehr der genannten Verbindungen, oder ein Gemisch aus zwei oder mehr der genannten Verbindungen.

Der Einsatz von Klebstoffen bei der Fertigung industrieller Güter verdrängt in zunehmendem Maße mechanische Befestigungsmittel. Dies geschieht insbesondere dort, wo die Verbindung zweier Werkstücke nur moderaten mechanischen Belastungen ausgesetzt ist. Der Vorteil des Einsatzes von Klebstoffen zur Herbeiführung mechanischer Verbindungen liegt insbesondere in der einfachen Anwendung der Klebstoffe, der Möglichkeit die Verbindung von Werkstoffen kontinuierlich und gewünschtenfalls vollflächig zu betreiben und der hohen Belastbarkeit moderner Klebstoffe, wie sie beispielsweise in der Möbelindustrie zum Einsatz kommen, begründet.

Häufig kommen in diesem Bereich Dispersionsklebstoffe zum Einsatz wie sie beispielsweise durch Emulsionspolymerisation von ethylenisch ungesättigten Monomeren in wäßriger Phase erhältlich sind. Nachteilig wirkt sich bei solchen Klebstoffen jedoch die Tatsache aus, daß sie aufgrund der Gegenwart von Emulgatoren und Schutzkolloiden in der wäßrigen Dispersion häufig nur eine geringe Widerstandsfähigkeit gegenüber Feuchtigkeit oder Wasser aufweisen.

So beschreibt beispielsweise die GB-A 1,440,337 einen Klebstoff, der über eine lange Lagerfähigkeit und gegenüber Feuchtigkeit beständig sein soll. Der beschriebene Klebstoff enthält ein Vinylester-Polymeres, Polyvinylalkohol als Schutzkolloid, ein wasserlösliches Harnstoff-Formaldehydharz mit einem niedrigeren Kondensationsgrad und ein wasserlösliches, saures Metallsalz. Aus den in der Schrift offenbarten Beispielen ergibt sich jedoch, daß der entsprechende Klebstoff den Anforderungen wie sie in modernen Klebstoffanwendungen in bezug auf Wasserfestigkeit auftreten, nicht gewachsen ist.

Die EP-A 0 191 460 beschreibt Polyvinylalkohol enthaltende Polymeremulsionen aus denen sich Beschichtungen mit verbesserter Wasserbeständigkeit erhalten lassen. Derart wasserbeständige Polymeremulsionen lassen sich gemäß der zitierten Schrift beispielsweise dadurch erhalten, daß entsprechende ethylenisch ungesättigte Monomere in Gegenwart von Polyvinylalkohol und einem Redoxsystem polymerisiert werden. Hierbei muß das Redoxsystem ein nichtionisches Redoxsystem sein, das im wesentlichen aus Wasserstoffperoxid oder einer organischen Peroxyverbindung als Oxidationsmittel und Ascorbinsäure oder Erythorbinsäure als Reduktionsmittel besteht. Die beschriebenen Beschichtungen erfüllen jedoch auch nach Vernetzung mit Glutaraldehyd nicht die Anforderungen wie sie beispielsweise gemäß DIN EN 204 D3 oder D4 gefordert werden.

Die EP-B 0 686 682 betrifft einen Dispersionsklebstoff auf Polyvinylester-Basis dessen Verfilmungen eine erhöhte Wasserresistenz aufweisen. Zu diesem Zweck wird eine wäßrige Polyvinylester-Dispersion eingesetzt, die neben polymeren Schutzkolloiden wasserlösliche, mit den polymeren Schutzkolloiden komplexierbare Verbindungen und Derivate von Polyaldehyden enthält, aus denen in sauren Medien Aldehydgruppen kontrolliert freisetzbar sind. In der Druckschrift wird jedoch nicht vorgeschlagen, als Vemetzerharz ein Vemetzerharz auf Basis von Phenol-Formaldehyd-Kondensationsprodukten, Hydroxymethyl-substituierten Imidazolidinonen wie das 1,3-Dimethylol-4,5-dihydroxyimidazolidinon (4,5-Dihydroxy-N,N'-dimethylolethylenhamstoff) oder Dihydroxymethylethylenhamstoff, Dihydroxymethylpropylenharnstoff oder Dihydroxymethyluron, Hydroxymethyl-substituierten Pyrimidinonen oder Hydroxymethyl-substituierten Triazinonen oder deren Thioderivate, deren Selbstkondensationsprodukte oder gemischte Kondensate aus zwei oder mehr der genannten Verbindungen, oder ein Gemisch aus zwei oder mehr der genannten Verbindungen einzusetzen.

Nachteilig wirkt sich beim oben genannten Stand der Technik insbesondere die Tatsache aus, daß die beschriebenen Klebstoffe entweder nicht die gestellten Anforderungen bezüglich der Wasserfestigkeit (DIN EN 204 D3 oder D4/5) erfüllen oder als Vernetzungsmittel niedermolekulare Polyaldehyde, entweder in freier Form oder beispielsweise als Bisulfitaddukt, benötigen. Problematisch wirkt sich hierbei die Tatsache aus, daß die genannten Polyaldehyde bzw. deren Addukte in der Regel einen starken Eigengeruch aufweisen, der unter Umständen als störend oder sogar gesundheitsschädlich empfunden wird.

Es bestand daher die Aufgabe eine Polymerdispersion zur Verfügung zu stellen, die im Hinblick auf aus einer solchen Polymerdispersion hergestellten Verfilmungen und insbesondere Verklebungen eine verbesserte Widerstandsfähigkeit gegen Feuchtigkeit beziehungsweise Wasser, insbesondere heißes Wasser, aufweist und die ohne Verwendung von freien Aldehyden oder deren Bisulfitaddukten auskommt.

Gelöst wird die Aufgabe durch eine Polymerdispersion, die Wasser, ein Emulsionspolymerisat, ein Schutzkolloid, ein wasserlösliches saures Metallsalz und ein Vemetzerharz enthält.

Gegenstand der Erfindung ist daher eine Polymerdispersion, enthaltend Wasser, mindestens ein durch Emulsionspolymerisation herstellbares Polymeres, mindestens ein Schutzkolloid, mindestens ein wasserlösliches, saures Metallsalz und mindestens ein Vemetzerharz auf Basis von Hydroxymethyl-substituierten Imidazolidinonen, Hydroxymethyl-substituierten Pyrimidinonen oder Hydroxymethyl-substituierten Triazinonen, deren Thioderivate oder deren Selbstkondensationsprodukte oder gemischte Kondensate aus zwei oder mehr der genannten Verbindungen, oder ein Gemisch aus zwei oder mehr der genannten Verbindungen.

Unter einer "Polymerdispersion" wird im Rahmen der vorliegenden Erfindung eine Dispersion partikelförmiger Polymerteilchen in wäßriger Phase verstanden. Die Größe der Polymerteilchen bewegt sich dabei in einem Rahmen, wie er üblicherweise bei der Durchführung von Polymerisationen mittels Emulsionspolymerisation eingehalten wird. Beispielhafte Größen liegen im Rahmen der vorliegenden Erfindung in einem Bereich von etwa 0,001 bis etwa 100 µm oder etwa 0,05 bis etwa 20 µm, vorzugsweise von etwa 0,01 bis 5 µm, und insbesondere von etwa 0,01 bis 2 µm.

Die erfindungsgemäßen Polymerdispersionen können Wasser enthalten, das aus einer beliebigen Quelle stammt. Beispielsweise handelt es sich beim in den erfindungsgemäßen Polymerdispersionen eingesetzten Wasser um Leitungswasser, wie es in der Regel aus entsprechenden Versorgungsquellen erhältlich ist. Es ist jedoch ebensogut möglich in den erfindungsgemäßen Polymerdispersionen Grundwasser, Brauchwasser, Prozeßwasser oder in sonstiger Form aus einem Kreislauf wiedergewonnene Server einzusetzen, sofern der pH-Wert und der Salzgehalt die Aufrechterhaltung stabiler Polymerdispersionen erlauben.

Zur Herstellung der erfindungsgemäßen Polymerdispersionen eignen sich olefinisch ungesättigte Monomere, die einer Emulsionspolymerisation zugänglich sind. Geeignete Polymere zur Herstellung der erfindungsgemäßen Dispersionen sind beispielsweise Vinylester-Polymere, deren monomerer Grundbaustein ein Vinylester einer linearen oder verzweigten Carbonsäure mit etwa 2 bis etwa 44, beispielsweise etwa 3 bis etwa 15 C-Atomen darstellt. Als Monomere für diese homo- oder copolymeren Polyvinylester kommen Vinylformiat, Vinylacetat, Vinylpropionat, Vinylisobutyrat, Vinylpivalat, Vinyl-2-ethylhexanoat, Vinylester von gesättigten verzweigten Monocarbonsäuren mit 9 bis etwa 15 C-Atomen im Säurerest, Vinylester von längerkettigen gesättigten oder ungesättigten Fettsäuren wie Vinyllaurat, Vinylstearat oder Vinylester der Benzoesäure und substituierter Derivate der Benzoesäure wie Vinyl-p-tert-butylbenzoat in Frage. Die genannten Vinylester können jeweils einzeln oder als Gemische aus zwei oder mehr der genannten Vinylester im Polyvinylester vorliegen. Der Anteil solcher Vinylester im gesamten Polymeren beträgt im Rahmen einer bevorzugten Ausführungsform der Erfindung mindestens etwa 50 Gew.-%, beispielsweise mindestens etwa 75 Gew.-%.

Im Rahmen einer weiteren bevorzugten Ausführungsform der vorliegenden Erfindung können in der Polymerdispersion auch Polymeren vorliegen, die neben einem der obengenannten Vinylester oder einem Gemisch aus zwei oder mehr der obengenannten Vinylester noch weitere Comonomere aufweisen. Weitere ethylenisch ungesättigte Monomere, die mit den obengenannten Vinylestern copolymerisiert sein können sind beispielsweise Acrylsäure, Methacrylsäure sowie deren Ester mit primären und sekundären gesättigten einwertigen Alkoholen mit 1 bis etwa 28 C-Atomen wie Methanol, Ethanol, Propanol, Butanol, 2-Ethylhexylalkohol, cycloaliphatischen Alkoholen wie Cyclohexanol, Hydroxymethylcyclohexan oder Hydroxyethylcyclohexan. Ebenfalls geeignet sind die Ester der obengenannten, ethylenisch ungesättigten Säuren mit längerkettigen Fettalkoholen. Ebenfalls als Comonomere geeignet sind ethylenisch ungesättigte Dicarbonsäuren wie Maleinsäure, Fumarsäure, Itaconsäure oder Citraconsäure sowie deren Mono- oder Diester mit gesättigten einwertigen aliphatischen Alkoholen mit 1 bis etwa 28 C-Atomen. Der Anteil solcher Comonomeren an den in der erfindungsgemäßen Polymerdispersion vorliegenden Polymeren kann bis zu etwa 25 Gew.-% betragen, beispielsweise etwa 0,1 bis etwa 15 Gew.-%.

Ebenfalls als Comonomere geeignet sind einfache ethylenisch ungesättigte Kohlenwasserstoffe wie Ethylen oder α-Olefine mit etwa 3 bis etwa 28 C-Atomen, beispielsweise Propylen, Butylen, Styrol, Vinyltoluol, Vinylxylol sowie halogenierte ungesättigte aliphatische Kohlenwasserstoffe wie Vinylchlorid, Vinylfluorid, Vinylidenchlorid, Vinylidenfluorid und dergleichen. Derartige Comonomere können einen Anteil am im Rahmen der erfindungsgemäßen Dispersionen eingesetzten Polymeren von bis zu etwa 50 Gew.-% oder darunter, beispielsweise etwa 0,5 bis etwa 25 Gew.-% aufweisen.

Ebenfalls im Rahmen der vorliegenden Erfindung als Comonomere einsetzbar sind beispielsweise mehrfach ethylenisch ungesättigte Monomere. Beispiele für solche Monomeren sind Diallylphthalate, Diallylmaleinat, Triallylcyanurat, Tetraallyloxyethan, Divinylbenzol, Butandiol-1,4-dimethacrylat, Triethylenglykoldimethacrylat, Divinyladipat, Allylacrylat, Allylmethacrylat, Vinylcrotonat, Methylenbisacrylamid, Hexandioldiacrylat, Pentaerythritoldiacrylat oder Trimethylolpropantriacrylat oder Gemische aus zwei oder mehr davon. Der Anteil solcher Comonomeren an den in den erfindungsgemäßen Dispersionen vorliegenden, durch Emulsionspolymerisation hergestellten Polymeren beträgt bis zu etwa 10 Gew.-%, beispielsweise etwa 0,01 bis etwa 5 Gew.-%.

Weiterhin als Comonomere geeignet sind ethylenisch ungesättigte Verbindungen mit N-funktionellen Gruppen. Hierzu zählen beispielsweise Acrylamid, Methacrylamid, Allylcarbamat, Acrylnitril, N-Methylolacrylamid, N-Methylolmethacrylamid, N-Methylolallylcarbamat sowie die N-Methylolester, -alkylether oder Mannichbasen des N-Methylolacrylamids oder N-Methylolmethacrylamids oder N-Methylolallylcarbamats, Acrylamidoglykolsäure, Acrylamidomethoxyssigsäuremethylester, N-(2,2-Dimethoxy-1-hydroxyethyl)acrylamid, N-Dimethylaminopropylacrylamid, N-Dimethylaminopropylmethacrylamid, N-Methylacrylamid, N-Methylmethacrylamid, N-Butylacrylamid, N-Butylmethacrylamid, N-Cyclohexylacrylamid, N-Cyclohexylmethacrylamid, N-Dodecylacrylamid, N-Dodecylmethacrylamid, Ethylimidazolidonmethacrylat, N-Vinylformamid, N-Vinylpyrrolidon und dergleichen.

Weitere im Rahmen der vorliegenden Erfindung zur Herstellung der erfindungsgemäßen Polymerdispersionen geeignete organische Polymere entstammen der Gruppe der Styrol-Butadien-Kautschuke (SBR). Solche Kautschuke werden durch Copolymerisation von Styrol und Butadien hergestellt und enthalten die beiden Monomere in der Regel in einem Gewichtsverhältnis von etwa 23,5 zu 76,5 oder etwa 40 zu 60. Die SBR werden üblicherweise durch Emulsionspolymerisation in Wasser hergestellt.

Eine weitere geeignete Gruppe von Polymeren sind die Polyvinylacetate (PVAc). Die Polyvinylacetate stellen thermoplastische Polymere des Vinylacetats dar. Die Polymerisation erfolgt in der Regel durch Suspensions- oder Emulsionspolymerisation.

Eine weitere geeignete Gruppe von Polymeren stellen die Polyethylenhomo- und Copolymere dar. Eine radikalische Polymerisation von Ethylen wird beispielsweise im Rahmen der Hochdruckpolymerisation zu LDPE bei Drücken von etwa 1.400 bis 3.500 bar unter Temperaturen von 150 bis 350 °C durchgeführt. Die Reaktion wird dabei durch Sauerstoff oder Peroxide gestartet. Als Comonomere eignen sich lineare oder verzweigte α,β-ungesättigte Olefine.

Eine weitere Gruppe von geeigneten Polymeren stellen die Polyacrylsäureester oder die Methacrylsäureester oder Copolymere aus Polyacrylsäureestem und Polymethacrylsäureestem dar. Gegebenenfalls können die genannten Polymere noch geringe Anteile (bis zu etwa 10 %) freie Acrylsäure- oder Methacrylsäuregruppen aufweisen.

Ein weiteres geeignetes Polymeres ist das Polyvinylidenchlorid. Das Polymere wird vorzugsweise durch Emulsionspolymerisation von 1,1-Dichlorethylen erhalten. Besonders geeignet sind Copolymere von 1,1-Dichlorethylen mit Acrylaten, Methacrylaten, Vinylchlorid oder Acrylnitril.

Ein weiteres geeignetes Polymeres ist das Polyvinylidenfluorid. Das Polymere läßt sich durch Polymerisation von Vinylidenfluorid erhalten und kann beispielsweise durch Copolymerisation mit geeigneten Monomeren wie Ethylen, Acrylnitril, Acrylatestem, Methacrylatestem und dergleichen in bezug auf chemische und mechanische Eigenschaften angepaßt werden.

Ebenfalls geeignet sind die Polyvinylchloride, wie sie durch Emulsionspolymerisation (E-PVC) erhältlich sind.

Die genannten Polymeren können im Rahmen der vorliegenden Erfindung in der erfindungsgemäßen Polymerdispersion sowohl einzeln als auch im Gemisch aus zwei oder mehr davon vorliegen.

In einer bevorzugten Ausführungsform der Erfindung wird als organisches Polymeres ein Copolymeres von Vinylacetat und Ethylen (EVA-Copolymeres) eingesetzt. In einer weiteren bevorzugten Ausführungsform der Erfindung enthält die Polymerdispersion Polyvinylacetat oder Polyacrylat, insbesondere Polybutylacrylat oder ein Gemisch aus Polyvinylacetat und Polyacrylat.

Die erfindungsgemäße Polymerdispersion enthält die genannten, durch Emulsionspolymerisation herstellbaren Polymeren in einer Menge von mindestens etwa 30 Gew.-%. Im Rahmen einer bevorzugten Ausführungsform der vorliegenden Erfindung beträgt der Anteil an solchen Polymeren mindestens etwa 35 oder mindestens etwa 40 Gew.-%. Der Gehalt an solchen Polymeren kann jedoch auch darüber liegen, beispielsweise bei mindestens etwa 45 Gew.-% oder mindestens etwa 50 Gew.-% oder darüber, beispielsweise bei mindestens etwa 55 oder mindestens etwa 60 Gew.-%.

Die erfindungsgemäße Polymerdispersion enthält neben den bislang genannten, durch Emulsionspolymerisation herstellbaren organischen Polymeren noch mindestens ein Schutzkolloid oder ein Gemisch aus zwei oder mehr Schutzkolloiden. Als Schutzkolloide eignen sich beispielsweise veretherte Cellulosederivate wie Hydroxyethylcellulose, Hydroxypropylcellulose oder Carboxymethylcellulose. Ebenfalls geeignet sind Polyvinylpyrrolidon oder Polycarbonsäuren wie Polyacrylsäure oder Polymethacrylsäure, gegebenenfalls in Form ihrer Copolymerisate mit gegebenenfalls OH-Gruppen tragenden Estern der Acrylsäure oder Methacrylsäure, sowie Copolymere der Maleinsäure oder des Maleinsäureanhydrids mit weiteren ethylenisch ungesättigten Verbindungen wie Methylvinylether oder Styrol. Im Rahmen einer bevorzugten Ausführungsform der vorliegenden Erfindung wird als Schutzkolloide ist jedoch Polyvinylalkohol, beispielsweise Polyvinylalkohol mit einem Hydrolysegrad von etwa 30 bis etwa 100 Gew.-%, beispielsweise etwa 60 bis etwa 98 Gew.-% oder etwa 70 bis etwa 88 Gew.-%, oder ein Gemisch aus zwei oder mehr solcher Polyvinylalkohole eingesetzt. Die im Rahmen der vorliegenden Erfindung in den erfindungsgemäßen Polymerdispersionen eingesetzten Schutzkolloide können, wie oben beschrieben, einzelnen eingesetzt werden. Es ist jedoch im Rahmen der vorliegenden Erfindung genauso gut möglich, ein Gemisch aus zwei oder mehr der genannten Schutzkolloide einzusetzen.

Im Rahmen einer bevorzugten Ausführungsform der vorliegenden Erfindung enthält die Polymerdispersion ein OH-Gruppen tragendes Schutzkolloid. In einer weiteren bevorzugten Ausführungsform der vorliegenden Erfindung enthält die Polymerdispersion Polyvinylalkohol als Schutzkolloid.

Der gesamte Anteil des Schutzkolloids oder der Schutzkolloide an der gesamten erfindungsgemäßen Polymerdispersion beträgt etwa 0,1 bis etwa 20, beispielsweise etwa 0,5 bis etwa 15 oder etwa 1 bis etwa 10 Gew.-%.

Die erfindungsgemäße Polymerdispersion enthält ein wasserlösliches, saures Metallsalz. Geeignete Salze sind beispielsweise die Nitrate, Chloride, Oxychloride oder Sulfate von Aluminium, Eisen, Chrom, Titan, Zirkonium oder Vanadium. Im Rahmen einer bevorzugten Ausführungsform der vorliegenden Erfindung werden insbesondere die Salze des Aluminiums, des Chroms oder des Zirkoniums, beispielsweise Aluminiumchlorid, Aluminiumnitrat, Chromchlorid oder Zirkonoxychlorid eingesetzt. Die genannten sauren Metallsalze können im Rahmen der vorliegenden Erfindung jeweils alleine oder als Gemisch aus zwei oder mehr davon eingesetzt werden.

Die entsprechenden Salze werden in einer Menge von etwa 0,05 bis etwa 20 Gew.-%, bezogen auf die gesamte Polymerdispersion, beispielsweise etwa 0,1 bis etwa 10 Gew.-% oder etwa 0,2 bis etwa 5 Gew.-%, eingesetzt. Vorteilhafterweise wird eine Lösung der entsprechenden Metallsalze in die Polymerdispersion eingerührt.

Im Rahmen einer bevorzugten Ausführungsform der Erfindung wird das entsprechenden Metallsalze oder ein Gemisch aus zwei oder mehr der entsprechenden Metallsalze in einer Menge zugegeben, daß der pH-Wert der Polymerdispersion etwa 1 bis etwa 5 beträgt. Im Rahmen einer weiteren bevorzugten Ausführungsform der Erfindung beträgt der pH-Wert der Polymerdispersion etwa 2 bis etwa 4.

Wenn der pH-Wert der Polymerdispersion auch über längere Zeit stabil bleiben soll, so hat es sich als vorteilhaft erwiesen, wenn der Polymerdispersion ein Puffersystem zugegeben wird. Geeignete Puffersysteme für die Dispersion sind beispielsweise:
- Carbonat/Hydrogencarbonat
- Natriumacetat/Essigsäure,
- Monokaliumcitrat (KH₂-citrat),
- Mononatriumphosphat/Zitronensäure.

Neben den bereits genannten Bestandteilen enthält die erfindungsgemäße Polymerdispersion noch ein Vernetzerharz oder ein Gemisch aus zwei oder mehr Vernetzerharzen. Als Vemetzerharze werden im Rahmen der vorliegenden Erfindung entweder 1,3-Dimethylol-4,5-dihydroxyimidazolidon (4,5-Dihydroxy-N,N'-dimethylolethylenhamstoff) oder Dihydroxymethylethylenharnstoff, Dihydroxymethylpropylenhamstoff oder Dihydroxymethyluron oder deren Thioderivate oder Selbstkondensationsprodukte davon oder ein Gemisch aus zwei oder mehr davon eingesetzt.

Als Vernetzerharztypen eignen sich Vernetzerharze auf Basis von Hydroxymethyl-substituierten Imidazolidinonen wie das 1,3-Dimethylol-4,5-dihydroxyimidazolidinon (4,5-Dihydroxy-N,N'-dimethylolethylenharnstoff), Hydroxymethyl-substituierten Pyrimidinonen oder Hydroxymethyl-substituierten Triazinonen oder deren Selbstkondensationsprodukte oder gemischte Kondensate aus zwei oder mehr der genannten Verbindungen, oder ein Gemisch aus zwei oder mehr der genannten Verbindungen. Derartige Vernetzerharze sind beispielsweise unter den Namen Fixapret, Stabitex, Permafresh, Sarcoset, Sumitex, Prox, Knittex, Cassurit, Neuperm oder Depremol kommerziell erhältlich.

Im Rahmen einer weiteren Ausführungsform der vorliegenden Erfindung werden als Vernetzerharze die Verbindungen der Fixapret-Reihe eingesetzt, beispielsweise Fixapret C-PX, Fixapret COC, Fixapret CP 40 IGD, Fixapret CPK IGD, Fixapret CPNS IGD, Fixapret CP IGD oder Fixapret CPN IGD. Die genannten Verbindungen werden üblicherweise als wäßrige Emulsionen oder Lösungen mit einem Feststoffgehalt zwischen etwa 30 und 50 Gew.-% eingesetzt. Im Rahmen einer bevorzugten Ausführungsform beträgt der pH-Wert etwa 7,5 bis etwa 9.

Bei Fixapret C-PX handelt es sich um ein Polykondensationsprodukt von Glyoxal-Harnstoff-Formaldehyd (Dimethylglyoxal-Urein) in Wasser, mit einem pH-Wert von 8,0 bis 8,5, einem Feststoffgehalt von 40 bis 42 Gew.-%, einem Gehalt an freiem Formaldehyd von weniger als 1,1 Gew.-%, einer Dichte von 1,03 bis 1,06 g /cm³, einer Apha-Farbzahl von höchstens 50, das in Gegenwart von MgCl keine Fällung verursacht.

Im Rahmen einer weiteren bevorzugten Ausführungsform der Erfindung enthält die Polymerdispersion ein Vemetzerharz auf Basis von 1,3-Dimethylol-4,5-dihydroxyimidazolidinon (4,5-Dihydroxy-N,N'-dimethylolethylenharnstoff) entweder in Form der reinen angegebenen Verbindungen, deren Selbstkondensationsprodukten oder deren Gemisch.

Weitere geeignete Vemetzerharze sind beispielsweise in der unter dem Namen Stabitex (Hersteller: BASF) vertriebenen Produktreihe kommerziell erhältlich. Grundsätzlich sind alle unter dem oben genannten Namen vertriebenen Produkte einsetzbar. Im Rahmen einer bevorzugten Ausführungsform der vorliegenden Erfindung wird als Vemetzerharz jedoch Stabitex ZF oder Stabitex GFA eingesetzt. Die genannten Verbindungen werden üblicherweise als wäßrige Emulsionen oder Lösungen mit einem Feststoffgehalt zwischen etwa 30 und 50 Gew.-% eingesetzt. Im Rahmen einer bevorzugten Ausführungsform beträgt der pH-Wert etwa 7,5 bis etwa 9.

Die erfindungsgemäßen Polymerdispersionen enthalten die Vemetzerharze in einer Menge von etwa 0,01 bis etwa 5 Gew.-%, beispielsweise in einer Menge von 0,05 bis etwa 4 Gew.-% oder 0,1 bis etwa 3 Gew.-%. Innerhalb dieses Intervalls sind beispielsweise Mengen von etwa 0,5 bis etwa 2 oder 0,8 bis etwa 1,5 Gew.-% besonders geeignet.

In einer weiteren bevorzugten Ausführungsform der Erfindung kann die Dispersion noch mindestens ein ionisches Tensid enthalten. In einer weiteren bevorzugten Ausführungsform der Erfindung weist ein solches ionisches Tensid ein Molekulargewicht von weniger als etwa 600 auf.

Es können hierbei anionische, kationische oder ampholytische Tenside, oder Gemische aus zwei oder mehr davon, enthalten sein. Beispiele für geeignete anionische Tenside sind Alkylsulfate, insbesondere solche mit einer Kettenlänge von etwa 8 bis etwa 18 C-Atomen, Alkyl- und Alkarylethersulfate mit etwa 8 bis etwa 18 C-Atomen im hydrophoben Rest und 1 bis etwa 10 Ethylenoxid (EO) oder Propylenoxid (PO) Einheiten, oder deren Gemisch, im hydrophilen Teil des Moleküls, Sulfonate, insbesondere Alkylsulfonate, mit etwa 8 bis etwa 18 C-Atomen, Alkylarylsulfonate mit etwa 8 bis etwa 18 C-Atomen, Tauride, Ester und Halbester der Sulfobernsteinsäure mit einwertigen Alkoholen oder Alkylphenolen mit 4 bis etwa 15 C-Atomen, die gegebenenfalls mit 1 bis etwa 20 EO-Einheiten ethoxyliert sein können, Alkali- und Ammoniumsalze von Carbonsäuren, beispielsweise von Fettsäuren oder Harzsäuren mit etwa 8 bis etwa 32 C-Atomen oder deren Gemischen, Phosphorsäurepartialester und deren Alkali- und Ammoniumsalze.

In einer bevorzugten Ausführungsform der Erfindung werden als anionische Tenside Alkyl- und Alkarylphosphate mit etwa 8 bis etwa 22 C-Atomen im organischen Rest, Alkylether- oder Alkaryletherphosphate mit etwa 8 bis etwa 22 C-Atomen im Alkyl- bzw. Alkarylrest und 1 bis etwa 10 EO-Einheiten eingesetzt.

Beispiele für kationische Tenside sind Salze von primären, sekundären oder tertiären Fettaminen mit etwa 8 bis etwa 24 C-Atomen mit Essigsäure, Schwefelsäure, Salzsäure oder Phosphorsäuren, quatemäre Alkyl- und Alkylbenzolammoniumsalze, insbesondere solche, deren Alkylgruppen etwa 6 bis etwa 24 C-Atome aufweisen, insbesondere die Halogenide, Sulfate, Phosphate oder Acetate, oder Gemische aus zwei oder mehr davon, Alkylpyridinium-, Alkylimidazolinium- oder Alkyloxazolidiniumsalze, insbesondere solche, deren Alkylkette bis zu etwa 18 C-Atome aufweist, beispielsweise die Halogenide, Sulfate, Phosphate oder Acetate, oder Gemische aus zwei oder mehr davon.

Beispiele für ampholytische Tenside sind langkettig substituierte Aminosäuren wie N-Alkyl-di(aminoethyl)glycin oder N-Alkyl-2-aminopropionsäuresalze, Betaine, wie N-(3-acylamidopropyl)-N,N-dimethylammoniumsalze mit einem C₈₋₁₈-Acylrest oder Alkylimidazoliumbetaine.

In einer weiteren bevorzugten Ausführungsform der vorliegenden Erfindung werden die folgenden anionischen Tenside eingesetzt: die Alkalisalze, insbesondere das Na-Salz der C_{12/14}-Fettalkoholethersulfate, Alkylphenolethersulfate, insbesondere deren Alkali- oder NH₄-Salze, Na-n-Dodecylsulfat, Di-K-Ölsäuresulfonat (C₁₈), Na-n-alkyl-(C₁₀C₁₃)-benzolsulfonat, Na-2-Ethylhexylsulfat, NH₄-Laurylsulfat (C_{8/14}), Na-Laurylsulfat (C_{12/14}), Na-Laurylsulfat (C_{12/16}), Na-Laurylsulfat (C_{12/18}), Na-Cetylstearylsulfat (C_{16/18}), Na-Oleylcetylsulfat (C_{16/18}), Sulfobemsteinsäuremonoester-di-Na-Salz, Fettalkoholsulfosuccinat-di-Na-Salz, Dialkylsulfosuccinat-Na-Salz oder Di-Na-Sulfosuccinamat oder Gemische aus zwei oder mehr davon.

Wenn die erfindungsgemäße Polymerdispersion ionische Tenside enthält, so sind sie in einer bevorzugten Ausführungsform der Erfindung in einer Menge von bis zu etwa 1 Gew.-% oder weniger, beispielsweise bis zu etwa 0,8 Gew.-% oder etwa 0,5 Gew.-%, oder weniger, bezogen auf die gesamte Dispersion, enthalten. Gegebenenfalls können auch geringere Mengen an ionischem Tensid enthalten sein, beispielsweise bis zu etwa 0,2 Gew.-% oder darunter, beispielsweise etwa 0,1 Gew.-%, 0,05 Gew.-% oder 0,02 Gew.-%.

In einer weiteren bevorzugten Ausführungsform kann die füllstoffhaltige Polymerdispersion mindestens ein nichtionisches Tensid mit einem Molekulargewicht von weniger als etwa 600 enthalten.

Beispiele für nichtionische Tenside sind Alkylpolyglykolether, vorzugsweise solche mit etwa 8 bis etwa 20 EO-Einheiten und Alkylresten mit etwa 8 bis etwa 20 C-Atomen, Alkylarylpolyglykolether, vorzugsweise solche mit etwa 8 bis etwa 40 EO-Einheiten und etwa 8 bis etwa 20 C-Atomen in den Alkyl- oder Arylresten, Ethylenoxid/Propylenoxid (EO/PO)-Blockcopolymere, vorzugsweise solche mit etwa 8 bis etwa 40 EO- bzw. PO-Einheiten, Additionsprodukte von Alkylaminen mit Alkylresten von etwa 8 bis etwa 22 C-Atomen mit Ethylenoxid oder Propylenoxid, Fett- und Harzsäuren mit etwa 6 bis etwa 32 C-Atomen, Alkylpolyglykoside mit linearen oder verzweigten, gesättigten oder ungesättigten Alkylresten mit im Mittel etwa 8 bis etwa 24 C-Atomen und einem Oligoglykosidrest mit etwa 1 bis etwa 10 Hexose- oder Pentoseeinheiten im Mittel oder Gemische aus zwei oder mehr davon, Naturstoffe und deren Derivate wie Lecithin, Lanolin oder Sarkosin, polare Gruppen enthaltende lineare Organo(poly)siloxane, insbesondere solche mit Alkoxygruppen mit bis zu etwa 10 C-Atomen und bis zu etwa 20 EO- oder PO-Gruppen.

Als nicht ionische Tenside geeignet sind beispielsweise Nonylphenolethoxylate, Octylphenolethoxylate, C_{12/14}-Fettalkoholethoxylate, Oleylcetylethoxylate, C_{16/18}-Fettalkoholethoxylate, Cetylstearylethoxylate, ethoxylierte Triglyzeride, Sorbitanmonolaurat, Sorbitanmonooleat, Sorbitan-20EO-monooleat, Sorbitan-20EO-monostearat oder ein Gemisch aus zwei oder mehr davon.

Im Rahmen einer weiteren bevorzugten Ausführungsform der vorliegenden Erfindung enthält die erfindungsgemäße Dispersion, beispielsweise zusätzlich zu einem Puffersystem oder anstatt eines solchen, noch eine oder mehrere Verbindungen, die zur Reaktion mit einer starken Mineralsäure, wie sie beispielsweise bei der Verwendung der sauren Metallsalze im Rahmen der vorliegenden Erfindung freigesetzt werden kann, unter Neutralisierung derselben reagieren kann. Geeignet sind hierzu beispielsweise Amine, die unter Protonierung mit einer Mineralsäure umgesetzt werden können. Geeignete Amine sind beispielsweise primäre, sekundäre oder tertiäre Amine, die gegebenenfalls noch eine oder mehrere funktionelle Gruppen aufweisen können. Besonders geeignet sind Amine, die eine oder mehrere OH-Funktionalitäten aufweisen, beispielsweise Ethanolamin, Diethanolamin oder insbesondere Triethanolamin. Weiterhin geeignet sind Verbindungen mit mindestens einer Epoxygruppe, die sich ebenfalls zu diesem Zweck eignen.

Besonders geeignet sind hierzu beispielsweise epoxidierte natürliche Fette oder Fettsäuren, wie sie beispielsweise unter dem Namen Edenol® von der Firma Henkel vertrieben werden. Besonders geeignet sind beispielsweise die Produkte Edenol D81, Edenol D82 und Edenol D83, die in der nachfolgenden Tabelle charakterisiert werden:

| | **EDENOL D 81** | **EDENOL D 82** | **EDENOL D 83** |
|---|---|---|---|
| Oxirangehalt | 6,3 - 7,0 % | 6,5 - 7,0 | 6,5 - 7,0 % |
| Säurepunkt | 0,0 - 0,5 | 0,0 - 0,3 | 0,0 - 0,3 |
| Jodzahl | 0,0 - 5 | 0,0 - 2,5 | 0,0 - 2,5 |
| Brechungsindex, 20 °C | 1,472 - 1,474 | 1,472 - 1,474 | 1,472-1,474 |

In einer weiteren bevorzugten Ausführungsform der Erfindung enthält die Dispersion bis zu etwa 30 Gew.-%, bezogen auf die gesamte Dispersion, an Zusatzstoffen. Zu den Zusatzstoffen zählen beispielsweise Stabilisatoren, Entschäumer, Antioxidantien, Photostabilisatoren, Pigmentverteiler, Füllstoffe, pH-Regler, Weichmacher und dergleichen.

Als Weichmacher geeignet sind beispielsweise Ester wie Abietinsäureester, Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester, sowie Gemische aus zwei oder mehr davon. Besonders geeignet sind die asymmetrischen Ester der difunktionellen, aliphatischen oder aromatischen Dicarbonsäuren, beispielsweise das Veresterungsprodukt von Adipinsäuremonooctylester mit 2-Ethylhexanol (Edenol DOA, Fa. Henkel, Düsseldorf) oder das Veresterungsprodukt von Phthalsäure mit Butanol.

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethem solcher Alkohole, beispielsweise Dioctylether (erhältlich als Cetiol OE, Fa. Henkel, Düsseldorf).

In einer weiteren bevorzugten Ausführungsform werden als Weichmacher endgruppenverschlossene Polyethylenglykole eingesetzt. Beispielsweise Polyethylen- oder Polypropylenglykoldi-C₁₋₄-alkylether, insbesondere die Dimethyloder Diethylether von Diethylenglykol oder Dipropylenglykol, sowie Gemische aus zwei oder mehr davon.

Die erfindungsgemäße Zubereitung kann, wenn eine Verwendung als Klebstoff vorgesehen ist, bis zu etwa 10 Gew.-% an üblichen Tackifiern enthalten. Als Tackifier geeignet sind beispielsweise Harze, Terpen-Oligomere, Cumaron-/Inden-Harze, aliphatische, petrochemische Harze und modifizierte Phenolharze.

Die erfindungsgemäße Zubereitung kann bis zu etwa 2 Gew.-%, vorzugsweise etwa 1 Gew.-% an UV-Stabilisatoren enthalten. Als UV-Stabilisatoren besonders geeignet sind die sogenannten Hindered Amine Light Stabilisators (HALS).

In einer weiteren bevorzugten Ausführungsform der Erfindung weist die Polymerdispersion etwa
- 30 bis 70 Gew.-% eines durch Emulsionspolymerisation herstellbaren Polymeren oder eines Gemischs aus zwei oder mehr davon
- 0,5 bis 15 Gew.-% eines Schutzkolloids oder eines Gemischs aus zwei oder mehr Schutzkolloiden
- 0,05 bis 20 Gew.-% eines wasserlöslichen, sauren Metallsalzes oder eines Gemischs aus zwei oder mehr davon,
- 0,01 bis 5 Gew.-% eines Vemetzerharzes oder eines Gemischs aus zwei oder mehr davon
- 29,44 bis 79,44 Gew.-% Wasser
- 0 bis 0,5 Gew.-% eines nichtionischen Tensids,
- 0 bis 0,1 Gew.-% eines ionischen Tensids,
- 0 bis 30 Gew.-% weitere Zusatzstoffe
auf.

In einer bevorzugten Ausführungsform der vorliegenden Erfindung wird die füllstoffhaltige Polymerdispersion durch Emulsionspolymerisation hergestellt. Unter "Emulsionspolymerisation" wird im Rahmen der vorliegenden Erfindung ein Verfahren zur Polymerisation verstanden, bei dem in Wasser unlösliche oder schlecht lösliche Monomere mit Hilfe von Emulgatoren in Wasser emulgiert und unter Verwendung wasserlöslicher Initiatoren polymerisiert werden. Geeignete Verfahren zur Emulsionspolymerisation werden beispielsweise in Comprehensive Polymer Chemistry, **4,** 171-218, Elias (5. Auflage), **2**, 93ff. Encyclopedia of Polymer Science and Engineering, **12**, 512ff. oder Encyclopedia of Polymer Science and Technology, **5**, 801ff. beschrieben. Weitere geeignete Referenzen sind beispielsweise aus den dem Fachmann bekannten lexikalischen Nachschlagewerken Ullmanns Enzyklopädie der technischen Chemie, Houben-Weyl (**E20**, 218-268) oder Kirk-Othmer bekannt. Auf die genannten Literaturstellen wird hiermit ausdrücklich Bezug genommen und die Offenbarung der genannten Stellen wird als Bestandteil der Offenbarung des vorliegenden Textes betrachtet.

Als Polymerisationsinitiatoren können bei der Herstellung der erfindungsgemäßen Polymerdispersionen sowohl wasserlösliche als auch öllösliche Polymerisationsinitiatoren verwendet werden. Als Polymerisationsinitiatoren besonders geeignet sind wasserlösliche Initiatoren wie tert.-Butylhydroperoxid, Natriumperoxodisulfat, Peroxodischwefelsäure, Cumolhydroperoxid, Azoverbindungen wie Diazoisobuttersäuredinitril oder Benzoylperoxid. Ebenfalls geeignet sind Redoxinitiatoren, d. h., Systeme die aus Oxidations- und Reduktionsmitteln bestehen. Wasserlösliche Redoxinitiatoren enthalten in vielen Fällen Übergangsmetalle, z. B. Fe/HO (I), es können jedoch auch andere Basiskomponenten enthalten sein, z. B. die Systeme Peroxysulfate/Metabisulfate, Peroxysulfate/Thiosulfate oder Peroxide/Thiosulfate.

Im Rahmen einer bevorzugten Ausführungsform der Erfindung werden als Polymerisationsinitiatoren Natriumpersulfat, Kaliumpersulfat oder Ammoniumpersulfat eingesetzt.

Die Menge an eingesetztem Polymerisationsinitiator liegt im Rahmen der vorliegenden Erfindung in der Regel bei etwa 0,01 bis etwa 0,5 Gew.-%, bezogen auf die gesamte Dispersion. In einer bevorzugten Ausführungsform der Erfindung liegt die gesamte eingesetzte Menge an Polymerisationsinitiator bei etwa 0,03 bis etwa 0,2 Gew.-%, beispielsweise bei etwa 0,05 bis etwa 0,15 Gew.-%.

Die Gesamtmenge des Polymerisationsinitiators kann im Rahmen der vorliegenden Erfindung bereits zu Beginn der Polymerisation in der Dispersion der Füllstoffpartikel vorliegen. In einer bevorzugten Ausführungsform der Erfindung wird der Polymerisationsinitiator jedoch in mindestens zwei Chargen zu unterschiedlichen Zeitpunkten der Polymerisationsreaktion zugegeben. So kann z. B. die Zugabe eines Teils der gesamten Menge des Polymerisationsinitiators vor der Monomerzugabe erfolgen, während die Zugabe der verbleibenden Restmenge portionsweise oder kontinuierlich während der Monomerzugabe, oder nach Beendigung der Monomerzugabe erfolgen kann.

Die weiteren in der Polymerdispersion enthaltenden Bestandteile, beispielsweise Schutzkolloide, Tenside und Zusatzstoffe können vor, während oder nach der Emulsionspolymerisation zugegeben werden.

Die Vemetzerharze können ebenfalls vor, während oder nach der Emulsionspolymerisation zugegeben werden. Im Rahmen einer bevorzugten Ausführungsform der vorliegenden Erfindung werden die Vemetzerharze jedoch vor oder während des Polymerisationsprozesses zugegeben. Die Zugabe kann dabei beispielsweise kurz vor Beginn oder mit dem Beginn der Polymerisationsreaktion erfolgen. Es hat sich gezeigt, daß die Zugabe des Vernetzerharzes vor oder während des Polymerisationsprozesses zu Produkten führt, deren Lagerstabilität bei hohen Temperaturen, beispielsweise bei etwa 30 bis etwa 50°C, gegenüber Produkten, bei denen das Vernetzerharz nach der Polymerisation zugegeben wurde, erhöht ist.

In einer weiteren bevorzugten Ausführungsform der vorliegenden Erfindung werden die wasserlöslichen, sauren Salze der Dispersion erst nach der Emulsionspolymerisation zugeführt.

In einer weiteren bevorzugten Ausführungsform der Erfindung erfolgt die Zugabe der Vemetzerharze vor der Zugabe der sauren Metallsalze.

Gegenstand der Erfindung ist damit auch ein Verfahren zur Herstellung einer Polymerdispersion, enthaltend Wasser, ein durch Emulsionspolymerisation herstellbares Polymeres, ein Schutzkolloid, ein wasserlösliches saures Metallsalz und mindestens ein Vemetzerharz, bei dem vor, während oder nach einer Emulsionspolymerisation zur Herstellung eines durch Emulsionspolymerisation herstellbaren Polymeren ein Vernetzerharz auf Basis von Hydroxymethyl-substituierten Imidazolidinonen, Hydroxymethyl-substituierten Pyrimidinonen oder Hydroxymethyl-substituierten Triazinonen oder deren Selbstkondensationsprodukte oder gemischte Kondensate aus zwei oder mehr der genannten Verbindungen oder ein Gemisch aus zwei oder mehr davon, zur Reaktionsmischung zugegeben wird.

In einer bevorzugten Ausführungsform der vorliegenden Erfindung werden als Vernetzerharze 1,3-Dimethylol-4,5-dihydroxyimidazolidinon (4,5-Dihydroxy-N,N'dimethylolethylenhamstoff) oder Dihydroxymethylethylenhamstoff, Dihydroxymethylpropylenhamstoff oder Dihydroxymethyluron oder deren Thioderivate entweder in Form der jeweiligen angegebenen Verbindungen, deren Selbstkondensationsprodukten oder gemischten Kondensaten aus zwei oder mehr der genannten Verbindungen oder Gemische aus zwei oder mehr der genannten Verbindungen oder Kondensate zugegeben.

Im Rahmen einer weiteren bevorzugten Ausführungsform der Erfindung erfolgt die Zugabe des Vemetzerharzes vor oder während der Polymerisationsreaktion.

In einer bevorzugten Ausführungsform der vorliegenden Erfindung wird die Emulsionspolymerisation in Gegenwart eines Schutzkolloids oder eines Gemischs aus zwei oder mehr Schutzkolloiden durchgeführt.

Die erfindungsgemäßen Polymerdispersionen eignen sich zur Oberflächenbeschichtung oder zur Verklebung von gleichen oder unterschiedlichen Substraten, wobei sowohl Substrate mit glatter Oberfläche als auch Substrate mit rauhen oder porösen Oberflächen beschichtet bzw. geklebt werden können. Im Rahmen einer bevorzugten Ausführungsform der vorliegenden Erfindung werden die erfindungsgemäßen Polymerdispersionen zur Beschichtung oder Verklebung von Substraten auf der Basis von natürlichen Rohstoffen, beispielsweise zur Verklebung von Holz, Papier oder Pappe verwendet.

Gegenstand der vorliegenden Erfindung ist daher auch die Verwendung der erfindungsgemäßen Polymerdispersionen in Klebstoffen oder Oberflächenbeschichtungsmitteln wie Lacken, Dispersionsfarben, Leimen, Klebstoffen oder sonstigen Oberflächenbeschichtungen.

Ein weiterer Gegenstand der Erfindung ist demnach auch ein Klebstoff oder ein Oberflächenbeschichtungsmittel, enthaltend eine erfindungsgemäße oder eine nach einem erfindungsgemäßen Verfahren hergestellte Polymerdispersion.

Die Erfindung wird nachfolgend durch Beispiele näher erläutert.

### Beispiele

### Beispiel 1: D-3 Produkt

100 kg einer Polyvinylacetat-Emulsion mit einem Feststoffgehalt von etwa 55 Gew.-%, 3,8 Gew.-% Polyvinylalkohol und einer Viskosität von 15.000 cps wurden mit 0,5 kg Fixapret COC (Hersteller: BASF) versetzt und für 15 Minuten gerührt. Anschließend wurden 1 kg Dibutylphthalat und 1,1 kg eines Polyglykolethers zu der Emulsion gegeben und für weitere 20 Minuten gerührt. Durch Zugabe von 1,2 kg Aluminiumtrichlorid zur Emulsion wurde der pH-Wert auf 2,8 eingestellt. Anschließend wurden zur Stabilisierung des pH-Werts 0,2 kg eines Puffers zugegeben. Die Viskosität der Dispersion wurde schließlich durch Zugabe von 30 kg Wasser auf 4 000 cps 1 cps = 1,0 x 10⁻³ Pas Viskosität eingestellt. Es wurde eine Endviskosität von 3 950 cps erhalten. Eine mit dieser Polymerdispersion durchgeführte Verklebung erfüllte die Anforderungen gemäß DIN EN 204 bezüglich der Beanspruchungsgruppe D3.

Als Polyvinylalkohol wurde Mowioll 26/88 der Firma Clariant eingesetzt, das einen Hydrolysegrad von 88 % aufweist.

Die Viskositätsmessungen wurden mit einem Brookfield RVF-Viskosimeter, Spindel 5, Geschwindigkeit 20, bei 23 °C durchgeführt. Als Polyglykolether wurde Polysolvan 0 der Firma Celanese GmbH eingesetzt. Es handelt sich um den Butylester der Glykolsäure, der Molekularformel C₆G₁₂O₂, mit einer Dichte von 1,015 bis 1,023 g/cm³, einem Index n_{D} von 1,423 bis 1,426, einer Viskosität von 4,62 mPas und einem maximalen Wassergehalt von 8 %.

Die zur Stabilisierung des pH-Wertes verwendete Pufferlösung wurde wie folgt hergestellt: Es wurden 16,32 g Natriumacetat und 22,24 g Essigsäure in 200 g Wasser aufgelöst und von dieser Lösung wurde 0,2 kg der beschriebenen Dispersion zugegeben.

### Vergleichs beispiel 2: D-4 Produkt

hergestellt mit einem Phenol-Formaldehyd-Harz, Resin XR 14227 A in wäßriger Emulsion.
Die Emulsion hat einen pH-Wert von 7 bis 7,5, einen Feststoffgehalt von 49 bis 52 Gew.-%, einen Gehalt an freiem Formaldehyd geringer als 0,1 Gew.-% und eine Viskosität von 60 bis 80 Poise (1 Poise = 0,1 Pas) bei 20 °C.

100 kg einer Polyvinylacetat-Emulsion mit etwa 55 Gew.-%, 3,8 Gew.-% Polyvinylalkohol und einer Viskosität von 15 000 cps wurden mit 0,5 kg Resin XR 14277 A (ein Phenol-Formaldehyd-Harz; Hersteller CECA / ELF-ATOCHEM) versetzt und für 15 Minuten gerührt. Anschließend wurden 1 kg Dibutylphthalat und 1,1 kg eines Polyglykolethers zu der Emulsion gegeben und für weitere 20 Minuten gerührt. Durch Zugabe von 1,2 kg Aluminiumtrichlorid zur Emulsion wurde der pH-Wert auf 2,8 eingestellt. Anschließend wurde zur Stabilisierung des pH-Werts 0,2 kg eines Puffers zugegeben. Schließlich wurden zur Einstellung der Viskosität der Dispersion 15 kg Wasser zugegeben und homogenisiert. Die Endviskosität - unter denselben Bedingungen wie im Beispiel 1 angegeben - betrug 5 200 cps. Eine mit dieser Polymerdispersion durchgeführte Verklebung erfüllte die Anforderungen gemäß DIN EN 204 bezüglich der Beanspruchungsgruppe D4.

In weiteren Vergleichsversuchen wurden für die nachfolgenden Klebstoffe die unten genannten Eigenschaften gemessen.
Produkt 1: das Produkt gemäß Beispiel 1,
Produkt 2: ein dem Typ D-2 ähnliches Produkt,
Produkt 3: ein handelsüblicher Klebstoff ohne Vernetzer

Gemessen wurden:
- Open-Time, womit die Trocknungsgeschwindigkeit (Papier auf einem 100 µm-Film) erfaßt wird,
- Setting-Time, womit die Klebegeschwindigkeit (eines Papiers auf einem 60 µm Klebstoff-Film auf Glas) erfaßt wird,
- Kurzzeit-Festigkeit nach 15 Minuten (Verklebung von Holzproben) und
- 24 Stunden-Festigkeit (Verklebung von Holzproben).

Es wurden die nachfolgenden Werte erhalten:

| | Prod. 1 | Prod. 2 | Prod. 3 |
|---|---|---|---|
| Open-Time, Minuten | 6 | 8-9 | 10-12 |
| Setting-Time, Sekunden | 8-10 | 12-15 | 14-16 |
| Kurzzeit-Festigkeit, kg/cm² | 95 | 90 | 80 |
| 24 Stunden-Festigkeit, kg/cm² | 115 | 110 | 110 |

### Beispiel 3: D3-Produkt mit Säureregulator

Zu 100 kg einer Polyvinylacetat-Emulsion mit einer Viskosität von 15000 cps, einem Festkörpergehalt von 55 % und einem Gehalt an Polyvinylalkohol von 3,8 Gew.-% wurden 0,5 kg Fixapret COC (Hersteller: BASF) gegeben und während 15 Minuten vermischt. Anschließend wurden der Emulsion 2,2 kg Dibutylphthalat zugeführt und für weitere 20 Minuten gerührt. Nach der Zugabe von 1,2 kg AlCl₃wies die Emulsion einen pH-Wert von 2,8 auf, anschließend wurden 0,8 kg Edenol D-82 zugegeben. Abschließend wurde die Viskosität der Dispersion durch Wasserzugabe auf einen Wert von 4000 cps eingestellt. Ein so hergestellter Klebstoff erfüllte die Anforderungen der Norm EN 204-205 gemäß der Beanspruchungsgruppe D3.

### Beispiel 4: D3-Produkt mit Diallylphthalat

Einer Lösung von 47 g Polyvinylalkohol in 600 g Wasser wurden 0,2 g Entschäumer und 12 g Fixapret COC zugeführt und vermischt. Die Mischung wurde auf etwa 80°C erwärmt. Anschließend wurden etwa 90% einer Katalysatorlösung von 1,3 g Ammoniumpersulfat in 6 g Wasser zugegeben und das Gemisch für etwa 5 Minuten homogenisiert. Während einem Zeitraum von etwa 3,5 bis 4 Stunden wurde ein Gemisch von 460 g Vinylacetat und 10 g Dibutylphthalat zudosiert, so daß die Temperatur in einem Bereich von 82 bis 88 °C blieb. Nach Beendigung der Zugabe des Monomerengemischs wurde die restliche Katalysatorlösung zugegeben und das Reaktionsgemisch für einen Zeitraum von etwa 1 Stunde bei einer Temperatur von etwa 90°C gerührt. Anschließend wurde der Festkörpergehalt auf einen Wert von etwa 55 % eingestellt. Nach dem Abkühlen der Dispersion auf eine Temperatur von etwa 35 bis etwa 40 °C wurden 15 g Dibutylphthalat zugegeben. Das so erhaltene Produkt wies einen pH-Wert von 4,2 und eine Viskosität (5/2/20) von 44.000 cps auf.

### Vergleichs - Beispiel 5: D4-Produkt

Zu 100 kg einer Dispersion gemäß Beispiel 4 wurden 10 kg HRJ-10416 (Alkyl-Phenol-Basis) gegeben und das Gemisch wurde für 15 Minuten homogenisiert. Anschließend wurden 3 kg Hexanol zugeführt und weitere 20 Minuten homogenisiert. Nach der Zugabe von 1,2 kg AlCl₃ betrug der pH-Wert 3,2. Die Dispersion wurde surch Zugabe von Wasser auf eine Viskosität von 4000 cps eingestellt. Eine mit diesem Klebstoff durchgeführte Verklebung weist eine Widerstandsfähigkeit gegenüber kochendem Wasser von 6 Stunden auf.

### Beispiele 6 - 9 : D3 Produkte

Zunächst wurde jeweils eine Polymerdispersion hergestellt. Hierzu wurde zu einer Vorlösung bestehend aus 32 Gew.-Teilen Wasser, 5 Gew.-Teilen Polyvinylalkohol, 0,1 Gew.-Teilen Natriumhydrogencarbonat und 0,1 Gew.-Teilen Natriumdisulfit eine Starterlösung und eine Monomerdispersion kontinuierlich zudosiert.

Die Starterlösung enthielt 5 Gew.-Teile Wasser und 0,1 Gew.-Teile Ammoniumperoxidsulfat. Die Monomeremulsion enthielt 11 Teile Wasser, 41 Teile Vinylacetat 0,5 Gew.-Teile Disponil A 3065 (Emulgator), 0,05 Gew.-Teile Natriumhydrogencarbonat und, sofern Vorhanden, 5 Gew.-Teile des jeweiligen in Tabelle 1 angegebenen Comonomeren.

Die Starterlösung und die Monomeremulsion wurden der Vorlösung kontinuierlich bei einer Temperatur von maximal 85°C zudosiert. Die erhaltenen Dispersionen wurden anschließend gemäß Tabelle 1 zu den erfindungsgemäßen Dispersionen additiviert.

**Tabelle 1:**

| Zusammensetzung der erfindungsgemäßen Dispersionen | | | | |
|---|---|---|---|---|
| | Beispiel 6 | Beispiel 7 | Beispiel 8 | Beispiel 9 |
| | | | | |
| Basis-Dispersion | Vac-/NMA-Copolymer | Vac-/NMA-Copolymer | Vac-Homopolymer | Vac-Homopolymer |
| | | | | |

| Additive in % auf gesamte Dispersion: | | | | |
|---|---|---|---|---|
| AlCl3*6H2O | 2,0 | 2,0 | 2,0 | 2,0 |
| Weichmacher | 2,0 | 2,0 | 2,0 | 2,0 |
| Entschäumer | 0,1 | 0,1 | 0,1 | 0,1 |
| | | | | |
| Triethanolami n | 0,5 | 0,5 | 0,5 | 0,5 |
| Natronlauge | 0,1 | 0,1 | 0,1 | 0,1 |
| Stabitex GFA | 1,0 | 2,0 | 2,0 | 4,0 |

## Patentansprüche

1. Polymerdispersion, enthaltend Wasser, mindestens ein durch Emulsionspolymerisation herstellbares Polymeres, mindestens ein Schutzkolloid, mindestens ein wasserlösliches, saures Metallsalz und mindestens ein Vernetzerharz auf Basis von Hydroxymethyl-substituierten Imidazolidinonen oder Thioimidazolidinonen, Hydroxymethyl-substituierten Pyrimidinonen oder Hydroxymethyl-substituierten Triazinonen oder deren Selbstkondensationsprodukte oder gemischte Kondensate aus zwei oder mehr der genannten Verbindungen, oder ein Gemisch aus zwei oder mehr der genannten Verbindungen.

2. Polymerdispersion nach Anspruch 1, **dadurch gekennzeichnet, daß** sie einen pH-Wert von 1 bis 5 aufweist. ,

3. Polymerdispersion nach Anspruch 1 oder 2, **dadurch gekennzeichnet, daß** sie als wasserlösliches, saures Metallsalz ein Aluminium-, ein Chrom- oder ein Zirkonsalz enthält.

4. Polymerdispersion nach einem der Ansprüche 1 bis 3, **dadurch gekennzeichnet, daß** sie ein OH-Gruppen tragendes Schutzkolloid enthält.

5. Polymerdispersion nach einem der Ansprüche 1 bis 4, **dadurch gekennzeichnet, daß** sie mindestens 50 Gew.-% eines durch Emulsionspolymerisation hergestellten Polymeren enthält.

6. Polymerdispersion nach einem der Ansprüche 1 bis 5, **dadurch gekennzeichnet, daß** sie als durch Emulsionspolymerisation herstellbares Polymeres Polyvinylacetat oder ein unter Verwendung von Vinylacetat hergestelltes Copolymeres enthält.

7. Polymerdispersion nach einem der Ansprüche 1 bis 6, **dadurch gekennzeichnet, daß** sie als Vemetzerharz 1,3-Dimethylol-4,5-dihydroxyimidazolidinon (4,5-Dihydroxy-N,N'-dimethylolethylenhamstoff) Dihydroxymethylethylenharnstoff, Dihydroxymethylpropylenharnstoff oder Dihydroxymethyluron, entweder in Form der angegebenen Verbindungen, oder als Gemisch aus zwei oder mehr davon den Selbstkondensationsprodukten der einzelnen Vernetzerharze oder Kondensationsprodukten aus zwei oder mehr der genannten Vernetzerharze, enthält.

8. Verfahren zur Herstellung einer Polymerdispersion gemäß einem der Ansprüche 1 bis 7, bei dem vor, während oder nach einer Emulsionspolymerisation zur Herstellung eines durch Emulsionspolymerisation herstellbaren Polymeren ein Vemetzerharz auf Basis von Hydroxymethyl-substituierten Imidazolidinonen, Hydroxymethyl-substituierten Pyrimidinonen oder Hydroxymethyl-substituierten Triazinonen oder deren Thioderivaten oder deren Selbstkondensationsprodukte oder gemischte Kondensate aus zwei oder mehr der genannten Verbindungen oder ein Gemisch aus zwei oder mehr der genannten Verbindungen, zur Reaktionsmischung zugegeben wird.

9. Verfahren nach Anspruch 8, **dadurch gekennzeichnet, daß** als Vemetzerharze 1,3-Dimethylol-4,5-dihydroxyimidazolidinon (4,5-Dihydroxy-N,N'-dimethylolethylenharnstoff) oder Dihydroxymethylethylenhamstoff, Dihydroxymethylpropylenhamstoff oder Dihydroxymethyluron oder deren Thioderivate entweder in Form der jeweiligen angegebenen Verbindungen, deren Selbstkondensationsprodukten oder gemischten Kondensaten aus zwei oder mehr der genannten Verbindungen oder Gemische aus zwei oder mehr der genannten Verbindungen oder Kondensate zugegeben werden.

10. Klebstoff oder Oberflächenbeschichtungsmittel, enthaltend eine Polymerdispersion nach einem der Ansprüche 1 bis 7 oder eine nach einem der Ansprüche 8 oder 9 hergestellte Polymerdispersion.

11. Verwendung einer Polymerdispersion gemäß einem der Ansprüche 1 bis 7 oder einer nach einem der Ansprüche 8 oder 9 hergestellten Polymerdispersion in Klebstoffen oder Oberflächenbeschichtungsmitteln.

## Claims

1. A polymer dispersion containing water, at least one polymer obtainable by emulsion polymerization, at least one protective colloid, at least one water-soluble acidic metal salt and at least one crosslinking resin based on hydroxymethyl-substituted imidazolidinones or thioimidazolidinones, hydroxymethyl-substituted pyrimidinones or hydroxymethyl-substituted triazinones or self-condensation products thereof or mixed condensates of two or more of the compounds mentioned or a mixture of two or more of the compounds mentioned.

2. A polymer dispersion as claimed in claim 1, **characterized in that** it has a pH value of 1 to 5.

3. A polymer dispersion as claimed in claim 1 or 2, **characterized in that** it contains an aluminium, chromium or zirconium salt as the water-soluble acidic metal salt.

4. A polymer dispersion as claimed in any of claims 1 to 3, **characterized in that** it contains a protective colloid bearing OH groups.

5. A polymer dispersion as claimed in any of claims 1 to 4, **characterized in that** it contains at least 50% by weight of a polymer produced by emulsion polymerization.

6. A polymer dispersion as claimed in any of claims 1 to 5, **characterized in that** it contains polyvinyl acetate or a copolymer produced using vinyl acetate as the polymer obtainable by emulsion polymerization.

7. A polymer dispersion as claimed in any of claims 1 to 6, **characterized in that** it contains as the crosslinking resin 1,3-dimethylol-4,5-dihydroxyimidazolidone (4,5-dihydroxy-N,N'-dimethylolethyleneurea), dihydroxymethyl ethyleneurea, dihydroxymethyl propyleneurea or dihydroxymethylurone either in the form of the compounds mentioned or a mixture of two or more thereof, self-condensation products of the individual crosslinking resins or condensation products of two or more of the crosslinking resins mentioned.

8. A process for the production of the polymer dispersion claimed in any of claims 1 to 7, **characterized in that** a crosslinking resin based on hydroxymethyl-substituted imidazolidinones, hydroxymethyl-substituted pyrimidinones or hydroxymethyl-substituted triazinones or thio derivatives thereof or self-condensation products thereof or mixed condensates of two or more of the compounds mentioned or a mixture of two or more thereof is added to the reaction mixture before, during or after an emulsion polymerization reaction for the production of a polymer obtainable by emulsion polymerization.

9. A process as claimed in claim 8, **characterized in that** 1,3-dimethylol-4,5-dihydroxyimidazozlidinone (4,5-dihydroxy-N,N'-dimethylolethyleneurea) or dihydroxymethyl ethyleneurea, dihydroxymethyl propyleneurea or dihydroxymethyl urone or thio derivatives thereof either in the form of the respective compounds mentioned, self-condensation products thereof or mixed condensates of two or more of the compounds mentioned or mixtures of two or more of the compounds mentioned or condensates are added as the crosslinking resins.

10. An adhesive or surface coating composition containing a polymer dispersion as claimed in any of claims 1 to 7 or a polymer dispersion produced by the process claimed in claim 8 or 9.

11. The use of a polymer dispersion as claimed in any of claims 1 to 7 or a polymer dispersion produced by the process claimed in claim 8 or 9 in adhesives or surface coating compositions.

## Revendications

1. Dispersion de polymère contenant de l'eau, au moins un polymère que l'on peut produire par une polymérisation en émulsion, au moins un colloïde protecteur, au moins un sel métallique acide soluble dans l'eau et au moins un résine réticulante à base d'imidazolidinones ou de thioimidazolidinones à substitution hydroxyméthyle, de pyrimidinones à substitution hydroxyméthyle ou de triazinones à substitution hydroxyméthyle, ou de leurs produits d'auto-condensation ou de produits de condensation mixtes de deux ou plusieurs des composés mentionnés, ou un mélange de deux ou plusieurs des composés mentionnés.

2. Dispersion de polymère selon la revendication 1, **caractérisée en ce qu'**elle présente un pH de 1 à 5.

3. Dispersion de polymère selon la revendication 1 ou 2, **caractérisée en ce qu'**elle contient comme sel métallique soluble dans l'eau un sel d'aluminium, un sel de chrome ou un sel de zirconium.

4. Dispersion de polymère selon l'une des revendications 1 à 3, **caractérisée en ce qu'**elle contient un colloïde protecteur portant des groupes OH.

5. Dispersion de polymère selon l'une des revendications 1 à 4, **caractérisée en ce qu'**elle contient au moins 50 % en poids d'un polymère produit au moyen d'une polymérisation en émulsion.

6. Dispersion de polymère selon l'une des revendications 1 à 5, **caractérisée en ce qu'**elle contient, comme polymère que l'on peut produire au moyen d'une polymérisation en émulsion, de l'acétate de polyvinyle ou un copolymère produit en utilisant de l'acétate de vinyle.

7. Dispersion de polymère selon l'une des revendications 1 à 6, **caractérisée en ce qu'**elle contient comme résine réticulante la 1,3-diméthylol-4,5-dihydroxyimidazolinone (4,5-dihydroxy-N,N'-diméthyloléthylèneurée), la dihydroxyméthyléthylèneurée, la dihydroxyméthylpropylèneurée ou la dihydroxyméthylurone, soit sous la forme des composés indiqués, soit sous forme de mélange de deux ou plusieurs d'entre eux , des produits d'auto-condensation des diverses résines réticulantes ou de produits de condensation de deux ou plusieurs des résines réticulantes mentionnées.

8. Procédé de production d'une dispersion de polymère selon l'une des revendications 1 à 7, dans lequel avant, pendant ou après une polymérisation en émulsion pour la production d'un polymère que l'on peut obtenir au moyen d'une polymérisation en émulsion, on ajoute au mélange réactionnel une résine réticulante à base d'imidazolidinones à substitution hydroxyméthyle, de pyrimidinones à substitution hydroxyméthyle ou de triazinones à substitution hydroxyméthyle, ou de leurs dérivés thio, ou de leurs produits d'auto-condensation, ou de produits de condensation mixtes de deux ou plusieurs des composés mentionnés ou d'un mélange de deux ou plusieurs des composés mentionnés.

9. Procédé selon la revendication 8, **caractérisé en ce qu'**on ajoute comme résines réticulantes la 1,3-diméthylol-4,5-dihydroxyimidazolidinone (4,5-dihydroxy-N,N'-diméthyloléthylèneurée) ou la dihydroxyméthyléthylèneurée, la dihydroxyméthylpropylèneurée ou la dihydroxyméthylurone, ou leurs dérivés thio, soit sous la forme des composés respectifs indiqués, de leurs produits d'auto-condensation ou de produits de condensation mixtes de deux ou plusieurs des composés mentionnés ou de mélanges de deux ou plusieurs des composés mentionnés ou de produits de condensation.

10. Adhésif ou produit de revêtement de surfaces contenant une dispersion de polymère selon l'une des revendications 1 à 7 ou une dispersion de polymère produite selon l'une des revendications 8 ou 9.

11. Utilisation d'une dispersion de polymère selon l'une des revendications 1 à 7 ou d'une dispersion de polymère produite selon l'une des revendications 8 ou 9 dans des adhésifs ou des produits de revêtement de surfaces.
